# EUROPEAN PATENT APPLICATION

(11) **EP 1 705 393 A1**
(43) Date of publication of application: **27.09.2006**
(21) Application number: 04820247.7
(22) Date of filing: 09.12.2004
(51) Int. Cl.: F16C 25/08, F16C 19/18, F16C 33/58, F16C 33/80, F02B 39/00

(54) **BEARING DEVICE FOR TURBOCHARGER**

(30) Priority: 10.12.2003 JP 2003411750
(71) Applicant: JTEKT CORPORATION, Chuo-ku Osaka-shi Osaka 542-8502 (JP)
(72) Inventor: UMEKAWA, Takahiro, NL-1077LC (NL)
(74) Representative: Sajda, Wolf E.
(86) International application number: PCT/JP2004/018349
(87) International publication number: WO 2005/057032

(57) **Abstract**

A turbocharger bearing assembly is disposed in a housing for rotatably supporting an intermediate portion of a rotary shaft of a turbocharger. A pair of outer rings formed with outer raceways are mounted to opposite ends of a substantially cylindrical inner ring formed with inner raceways, thereby constituting a bearing unit including two angular bearings. Thus, the number of assembly steps is reduced to facilitate an assembly work. A pair of sleeves are inserted in a gap defined between the outer rings. The sleeve is formed with an engaging portion on an outer periphery thereof for restricting its rotation relative to the housing and the outer ring. This makes it easy to position the bearing in the housing.

## Description

### Technical Field

The present invention relates to a bearing assembly for rotatably supporting a rotary shaft of an automotive turbocharger.

### Background Art

In response to a recent demand for fuel-efficient, low-emission automotive vehicles, an increasing number of automotive vehicles are equipped with turbochargers. The turbocharger includes a rolling bearing (hereinafter, referred to as "bearing") in a housing for rotatably supporting the rotary shaft of the which is disposed turbocharger. Such a bearing operates in an extremely severe environment of ultra-high speed rotation, extremely great acceleration or deceleration and ultra-high temperatures and besides, is required of high rotational accuracies. It is therefore essential to apply a proper preload to the bearing.
This need is properly satisfied by applying a constant preload to the bearing. In a prior-art technique, a spacer and a spring for applying the preload are assembled between two bearings each including an outer ring and an inner ring, thereby applying the constant preload to the bearings. In this case, the number of components is increased so that the number of assembly steps is increased.

As a result of the reduction of assembly steps, a turbocharger bearing assembly disclosed in Unexamined Japanese Utility Model Publication No.2577011 is arranged such that two inner rings are unified by forming two inner raceways at opposite ends of a cylinder body, that a pair of outer rings having outer raceways opposing the respective inner raceways are mounted to the above inner ring, and that a spring is interposed between the outer rings for applying the preload.

Unfortunately however, the turbocharger bearing assembly has a complicated configuration in which the outer rings are formed from a steel material in conformity with a shape of an inner side of the housing and which includes a portion for receiving the spring and oil holes. Therefore, the manufacture of the bearing assembly requires much labor and much processing cost. Furthermore, the outer rings are not adequately prevented from rotating relative to the housing and hence, the bearings may not be properly positioned in the housing or the oil holes may be displaced.
In view of the foregoing, the invention has been accomplished and has an object to provide a turbocharger bearing assembly which facilitates the assembly work, which permits the bearings to be readily positioned in the housing and which is manufactured at low cost.

### Disclosure of the Invention

According to the invention, a turbocharger bearing assembly disposed in a housing for rotatably supporting a rotary shaft of a turbocharger, comprises: a substantially cylindrical inner ring fitted on an outer periphery of the rotary shaft and formed with inner raceways on its outer periphery at places adjacent to opposite ends thereof; a pair of outer rings mounted to the housing as spaced away from each other with respect to an axial direction of the rotary shaft and formed with outer raceways on their inner peripheries in opposing relation with the inner raceways; a plurality of rolling elements rollably interposed between the respective inner raceways of the inner ring and the respective outer raceways of the outer rings; a pair of sleeves interposed between the outer rings as defining a gap therebetween and opposing each other with respect to the axial direction of the rotary shaft, the sleeve formed with an engaging portion on its outer periphery for restricting its rotation relative to the housing and the outer ring; and a spring interposed between these sleeves for spring biasing the outer rings via the sleeves in axially outward directions with respect to the rotary shaft, thereby applying a preload to the bearings.

According to the above turbocharger bearing assembly, a bearing unit including two bearings is constituted by assembling the respective pairs of outer rings and sleeves to the single cylindrical inner ring. Thus, the number of assembly steps is reduced. The sleeves interposed between the outer rings are engaged with the housing and with the outer rings, thereby preventing the outer rings from rotating relative to the housing.
Furthermore, the outer rings need not be formed in a complicated configuration for implementing therein a function of a spring seat, because the pair of sleeves, separate from the outer rings, are interposed between the outer rings, while the spring is interposed between these sleeves. Therefore, the outer ring has a simple configuration, permitting a general-purpose outer ring to be applied to the bearing assembly.

According to the above turbocharger bearing assembly, it is preferred that the sleeve is formed from a resin material and that the sleeve and the outer ring are integrally formed. For instance, an outer ring formed from a steel material may be previously set in a part of a mold, which may be filled with the resin material. The outer ring and the sleeve may be integrally formed by taking this procedure, so that these components may be handled as a single part. Thus, the assembly work for the turbocharger bearing assembly involves a reduced number of components, resulting in the reduction of the assembly steps.

According to the above turbocharger bearing assembly, it is preferred that an annularly notched step portion is formed on an inner periphery of the sleeve at an inside end thereof with respect to the axial direction of the rotary shaft. In this case, the length of the spring for applying the preload is increased by a depth of the recess, so that the spring has a smaller spring constant. Thus, the spring is adapted to apply the proper preload to the bearings in a more stable manner.

According to the above turbocharger bearing assembly, the inner periphery of the sleeve and the outer periphery of the inner ring may also cooperate to constitute a labyrinth seal having a gap of 0.5 mm or less. In a case where the bearing assembly is provided with grease lubrication, this constitution negates the need for providing a seal member on an inner side with respect to the rolling elements. Hence, the turbocharger bearing assembly may be manufactured at low cost.

According to the above turbocharger bearing assembly, it is preferred that the inner ring is formed with a recess on the inner periphery thereof for defining a gap between itself and the rotary shaft, the recess extended across a required axial range. This is effective to reduce a pressing force for press-fitting the inner ring on the rotary shaft, obviating indentation produced by press-fitting the inner ring on the rotary shaft. In this case, an inside diameter of the inner ring and an outside diameter of the rotary shaft may be adjusted such that the press-fitting force is smaller than an indentation producing load.

### Brief Description of the Drawings

FIG. 1 is a sectional view showing a turbocharger bearing assembly according to a first embodiment of the invention;
FIG. 2 is a plan view of FIG. 1;
FIG. 3 is a sectional view schematically showing an arrangement of a turbocharger assembled with the turbocharger bearing assembly; and
FIG. 4 is a sectional view showing a turbocharger bearing assembly according to a second embodiment of the invention.

### Best Modes for Carrying Out the Invention

Preferred embodiments of the invention will hereinafter be described with reference to the accompanying drawings.

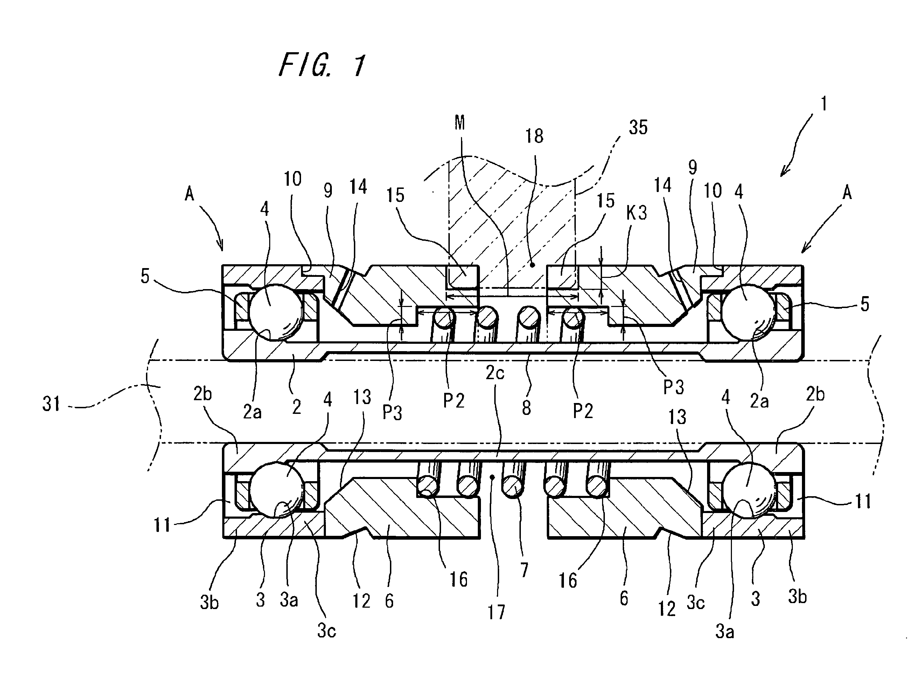

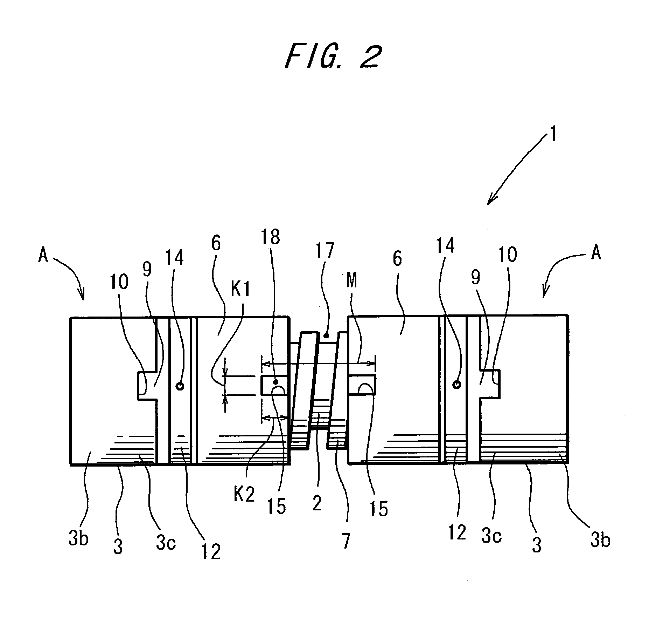

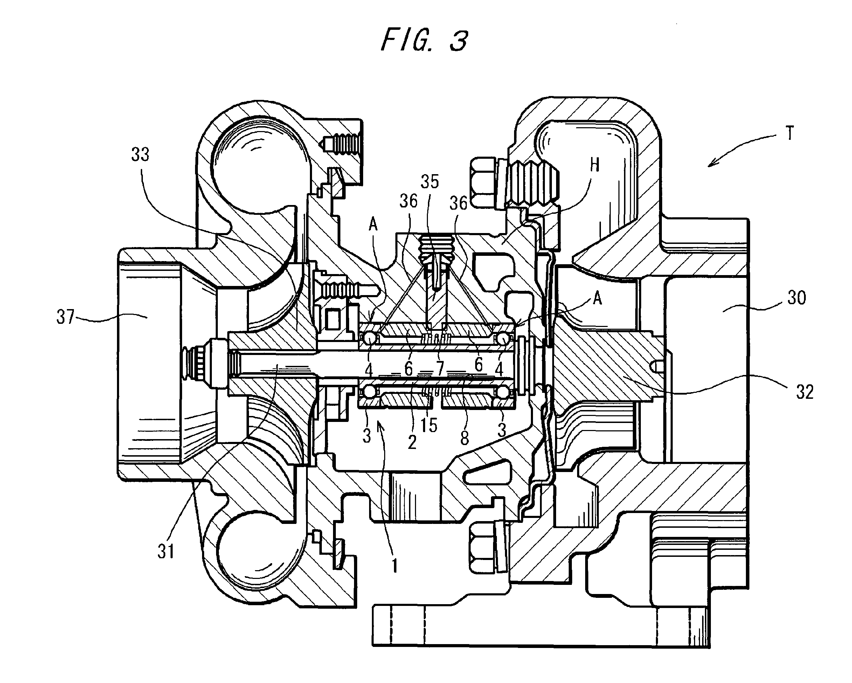

FIG. 1 is a sectional view showing a turbocharger bearing assembly 1 according to one embodiment of the invention. FIG. 2 is a plan view of the bearing. FIG. 3 schematically shows an arrangement of a turbocharger T assembled with the turbocharger bearing assembly 1. The turbocharger T utilizes exhaust gas through an exhaust-gas flow path 30 for rotating a turbine 32 fixed to one end (the right-hand side as seen in FIG. 3) of a rotary shaft 31.
The rotation of the rotary shaft 31 is transmitted to an impeller 33 fixed to the other end (the left-hand side as seen in FIG. 3) of the rotary shaft 31. The impeller 33 compresses intake air in an intake air path 37. Thus, the compressed air along with a fuel such as gasoline or light oil is fed into a cylinder of an engine. The rotary shaft 31 of such a turbocharger T is rotated at such a high speed on the order of tens of thousands to hundreds of thousands of revolutions per minute. What is more, the rotational speed of the rotary shaft is frequently varied according to the operation condition of the engine.
Hence, the turbocharger bearing assembly 1 disposed in a housing H supports the rotary shaft 31 relative to the housing H with a small rotational resistance, thereby reducing energy losses.

The turbocharger bearing assembly 1 is assembled in the housing H of the turbocharger T at a predetermined place. The turbine 32 is mounted to one end of the rotary shaft 31, whereas the impeller 33 is mounted to the other end thereof. The turbocharger bearing assembly 1 carries an intermediate portion of the rotary shaft 31 as allowing the rotary shaft to rotate relative to a through-hole of the housing H.
As shown in FIG. 1 and FIG. 2, the turbocharger bearing assembly 1 includes: a pair of angular bearings (hereinafter, referred to as "bearing") A which are constituted by an inner ring 2, a pair of outer rings 3, a plurality of rolling elements 4 rollably interposed between these rings, and cages 5 for retaining these rolling elements 4; a pair of sleeves 6 interposed between the outer rings; and a spring 7 interposed between the sleeves 6 for applying a preload to the bearings. A bearing unit including the two bearings A is constituted in this manner.

Next, a detailed description is made on the individual components of the turbocharger bearing assembly 1. The turbocharger bearing assembly 1 is constructed by assembling the two outer rings 3 to a single cylindrical inner ring 2, thus constituting the bearing unit including the two bearings A.
The inner ring 2 is substantially formed in a cylindrical shape, a longitudinal direction of which is defined by an axial direction of the rotary shaft 31 (hereinafter, referred to as "axial direction"). The inner ring is formed with angular-type inner raceways 2a on outer periphery thereof at the opposite ends thereof, the inner raceways having a predetermined curvature radius.
The inner ring 2 includes: inner-ring ends 2b located outwardly of the inner raceways 2a; and an inner-ring cylinder portion 2c located inwardly of the inner raceways 2a. The inner raceway 2a has its axis directed diagonally. The cylinder portion 2c has a smaller thickness than the inner-ring ends 2b.
The inner ring 2 includes a recess 8 which is formed on an inner periphery thereof to define a gap with respect to the rotary shaft 31, as axially extended between the right-hand and left-hand outer rings. The recess 8 reduces a contact area between the inner ring 2 and the rotary shaft 31, such as to obviate indentation produced by press-fitting the turbocharger bearing assembly 1 on the rotary shaft 31.

The inner ring 2 is manufactured by, for example, deep-drawing a steel sheet such as cold-roll steel sheet to form the inner raceways 2a having the predetermined curvature radius, followed by heat treatment such as carburizing and quenching, induction hardening or the like.
The two outer rings 3 are disposed at the opposite ends of the inner ring 2 as axially spaced away from each other. The outer ring 3 has a width of about one sixth of that of the inner ring 2. An outside end of the outer ring 3 is arranged flush with an outside end of the inner ring 2. The outer ring 3 includes: an angular-type outer raceway 3a opposing the inner raceway 2a and having a predetermined curvature radius; an outer-ring end 3b located outwardly of the outer raceway 3a; and an outer-ring cylinder portion 3c located inwardly of the outer raceway 3 a.
The outer-ring cylinder portion 3c has a smaller thickness than the outer-ring end 3b. As shown in FIG. 2, the outer ring 3 is formed with a recess 10 at a laterally inner side thereof for engagement with a first engaging portion 9 of the sleeve 6. The recess 10 is formed in dimensions engageable with the first engaging portion 9.
The outer ring 3 is manufactured by, for example, deep-drawing a steel sheet such as cold-roll steel sheet to form the outer raceway 3a having the predetermined curvature radius, followed by heat treatment such as carburizing and quenching, induction hardening or the like.

The plural rolling elements 4 are disposed in an annular space 11 defined between the outer-ring raceway 3a and the inner-ring raceway 2a, as rollably retained by the cage 5. The rolling elements 5 may be formed from any of various steel materials such as stainless steel. The cage 5 is so configured as to partially enclose the individual rolling elements 4.
While the material of the cage 5 varies depending upon the use thereof, the cage may be formed from any of steel materials and a variety of resin materials such as polyamide. The form of the cage is not limited.

The two sleeves 6 oppose each other via a gap therebetween and are interposed between the right-hand and left-hand outer rings 3. The sleeve 6 is shaped like a cylinder having the same diameter as that of the outer ring 3, so that an outer periphery of the sleeve 6 is flush with an outer periphery of the outer ring 3. The sleeve 6 is formed with the first engaging portion 9 projecting from an outward side of the outer periphery thereof, the first engaging portion engageable with the recess 10 of the outer ring 3. The first engaging portion 9 engages with the recess 10 thereby preventing the sleeve 6 from rotating relative to the outer ring 3.
Hence, the first engaging portion has such dimensions as to withstand torque applied to the outer ring 3. The first engaging portion 9 is not limited to the square-cornered shape but may have any protuberant shape such as a semi-circular cylinder shape. An alternative arrangement may also be made such that the first engaging portion 9 is shaped like a recess whereas the outer ring 3 is formed with the projection.

The sleeve 6 is formed with a first taper surface 12 on the outer periphery thereof. The sleeve 6 is further formed with a second taper surface 13 on an inner periphery thereof. An oil hole 14 having a required diameter is formed at place on a circumference of the sleeve 6 as extending therethrough from the first taper surface 12 to the second taper surface 13. An exit of the oil hole 14 through the second taper surface is located in the vicinity of the inner-ring raceway 2a.

Indent-shaped second engaging portions 15 are formed on the respective outer peripheries of the sleeves 6 on respective laterally inward sides thereof, such as to engage with a pin member 35. The right-hand and left-hand second engaging portions 15, 15 are located in corresponding relation with respect to the circumferential direction of the sleeves 6 and oppose each other as axially spaced from each other.
The respective second engaging portions 15 have a length K1, a width K2 and a depth K3 such that the pin member 35 of the housing H may be engageably received in a space defined between the right-hand and left-hand second engaging portions 15. A distance M between outside ends of the laterally opposite second engaging portions 15 is substantially equal to a width of the pin member 35 (the lateral direction as viewed in FIG. 1).
The second engaging portion 15 is not limited to the square-cornered shape but may have any shape to engageably receive the pin member 35, such as formed by hollowing out the sleeve in a semi-circular cylinder shape. The second engaging portion 15, the first engaging portion 9 and the oil hole 14 are aligned on a straight line axially extended on the outer periphery of the sleeve 6.

An annular step portion 16 for receiving the spring 7 is formed on the respective inner peripheries of the right-hand and left-hand sleeves 6. The step portion 16 is hollowed in a cylindrical shape having a slightly greater diameter than that of a helical coil spring 7. The step portion 16 has such widths P2 and depth P3 as to receive the spring 7. In a state where the right-hand and left-hand sleeves 6 are arranged in opposing relation, the laterally opposite step portions 16 define a cylindrical space 17 therebetween, so that the spring 7 is mounted in the cylindrical space 17.

The sleeve 6 configured as described above may be molded of any of various resin materials. Alternatively, the sleeve 6 may also be formed by injection molding or compression molding the resin material, followed by machining for finishing the sleeve to required dimensions. In a case where the sleeve 6 is formed by injection molding a thermoplastic resin material, the sleeve 6 and the outer ring 3 may be integrally formed, thereby reducing the number of assembly steps. For instance, a part unifying the outer ring 3 and the sleeve 6 may be formed by previously setting the outer ring 3 in a mold and filling the resin into space defined by the outer ring 3 and the mold. In this case, the sleeve 6 and the outer ring 3 are handled as a single part.

Any resin material having high heat resistance, rigidity and oil resistance may be employed. Such a material is exemplified by engineering plastic materials and super engineering plastic materials. Examples of a suitable material include polyamide, polyphenylene sulfide, polyether sulfone, fluorine resins, polyimide, polyamide-imide, polybenzoimidazole and the like.
It is preferred to use the thermoplastic resin such as polyamide and polyphenylene sulfide from the viewpoint of moldability, material cost and performance. However, imide resins are particularly preferred from the viewpoint of heat resistance. Any of various metals such as stainless steel may be used as the material of the sleeve.

The spring 7 is a helical coil spring having a predetermined spring constant. The spring serves to apply the preload by applying a resilient force to the right-hand and left-hand angular bearings A, A via the sleeves 6.
In an assembly procedure for the turbocharger bearing assembly 1, the inner ring 2 is first prepared. One of the outer rings 3 (the left-hand one as seen in FIG. 1, for example) is mounted to the inner ring 2 so that one of the bearings A is assembled. Subsequently, one of the sleeves 6 is assembled to the outer ring as bringing the first engaging portion 9 of the sleeve 6 into engagement with the recess 10 of the outer ring 3 (which is omitted in a case where the outer ring and sleeve are integrally formed).
Next, the spring 7 is mounted on the inner ring and the other sleeve 6 (the right-hand one as seen in FIG. 1) is assembled thereto. The other outer ring 3 is assembled as bringing the recess 10 of the outer ring 3 into engagement with the first engaging portion 9 of the sleeve 6. Then, the cage 5 and the rolling elements 4 are inserted as axially inwardly pushing the other outer ring 3. Subsequently, the other outer ring 3 is returned to a predetermined position by way of the resilient force of the spring 7. It is therefore necessary to provide a sufficient distance between the right-hand and left-hand sleeves 6 for permitting the execution of the above assembly procedure.

The turbocharger bearing assembly 1 thus assembled is assembled in the turbocharger T at a predetermined place in the following manner (FIG. 3). The turbocharger bearing assembly 1 is fitted into the housing H by fitting the inner ring of the turbocharger bearing assembly 1 on the rotary shaft 31.
Subsequently, the pin member 35 disposed substantially centrally of the housing H and having the required dimensions is engaged with the cylindrical space 18 defined by the second engaging portions 15 of the right-hand and left-hand sleeves 6. Thus, the turbocharger bearing assembly 1 is positioned and the assembly procedure is completed.

The turbocharger bearing assembly 1 with the two outer rings 3 assembled to the single inner ring 2 may be handled as the bearing unit including the two angular bearings A. Hence, the operation of assembling the bearing assembly to the rotary shaft 31 involves a reduced number of parts, resulting in the reduced number of assembly steps. Thus, the assembly work is facilitated.
Furthermore, the second engaging portions 15 engage with the pin member 35 thereby restricting the rotation and axial movement of the sleeves 6 relative to the housing H. In addition, the first engaging portions 9 engage with the recesses 10 of the outer rings 3 thereby restricting the rotation of the outer rings 3 relative to the sleeves 6. Thus, the outer rings 3 are prevented from rotating relative to the housing H. What is more, the bearings A may be readily positioned relative to the housing H.

The right-hand and left-hand sleeves 6 are interposed between the outer rings 3, whereas the spring 7 is interposed between these sleeves 6. This negates the need to construct the outer ring 3 in a complicated configuration to impart a function of a spring seat to the outer ring. Hence, the outer ring 3 may have a simple configuration, which permits the application of a general-purpose outer ring to the bearing assembly.
The recess 8 is formed on the inner periphery of the inner ring 2 to define the gap between the inner ring and the rotary shaft 31 across a certain axial range, thus contributing to the reduction of the pressing force for press-fitting the inner ring on the rotary shaft 31. This is effective to obviate the indentation produced by press-fitting the inner ring on the rotary shaft 31. Hence, the rotary shaft 31 is not damaged.

Furthermore, a good lubrication effect may be obtained because the oil holes 14 are located in the vicinity of the inner raceways 2a. The sleeves 6 and the housing H are positioned relative to each other by way of the second engaging portions 15, so that oil feed paths 36 (FIG. 3) of the housing H are prevented from displacing from the oil holes 14 of the sleeves 6. The oil feed paths 36 are disposed in the housing H such as to cool the angular bearings A by feeding the oil thereto and to lubricate the bearings.
Specifically, when the engine equipped with the turbocharger T is operated, the lubricant is removed of foreign substances by means of filters disposed at upstream ends of the oil feed paths 36 and is fed into a cylindrical gap defined between an inner periphery of the housing H and the outer peripheries of the sleeves 6 and outer rings 3.
The gap is formed by loose fitting the housing H, the outer rings and the like. The gap is filled with the lubricant thereby forming an oil film between the outer peripheries of the sleeves 6 and outer rings 3 and the inner periphery of the housing H, the oil film extended along the overall circumferences thereof.
Thus, the housing H and the angular bearings A may be cooled. The oil film also constitutes an oil film damper for damping vibrations based on the rotation of the rotary shaft 31. Some of the lubricant fed into the gap passes through the oil holes 14 to be ejected toward the outer periphery of the inner ring 2 for cooling and lubricating (oil jet lubrication) the angular bearings A, A.

Since the resin material is used as the material for forming the sleeve 6, even the sleeve having a complicated configuration may be manufactured at low cost. Particularly, in the case where the sleeve 6 and the outer ring 3 are integrally formed as combined with each other, the assembly work for the turbocharger bearing assembly 1 involves a reduced number of components and hence, the number of assembly steps may be reduced even further.
In a case where the sleeve 6 is of low-cost, low-temperature use design, the resin material may be used to form the sleeve. On the other hand, in a case where the sleeve is of high-precision, high-temperature use design, the metal material may be used to form the sleeve. The sleeves 6 are formed with the step portions 16, respectively, so that the length of the spring 7 for applying the preload is increased by the widths of the step portions 16 (P2+P2). Hence, the spring is decreased in the spring constant, so as to be able to apply a proper preload to the angular bearings A.

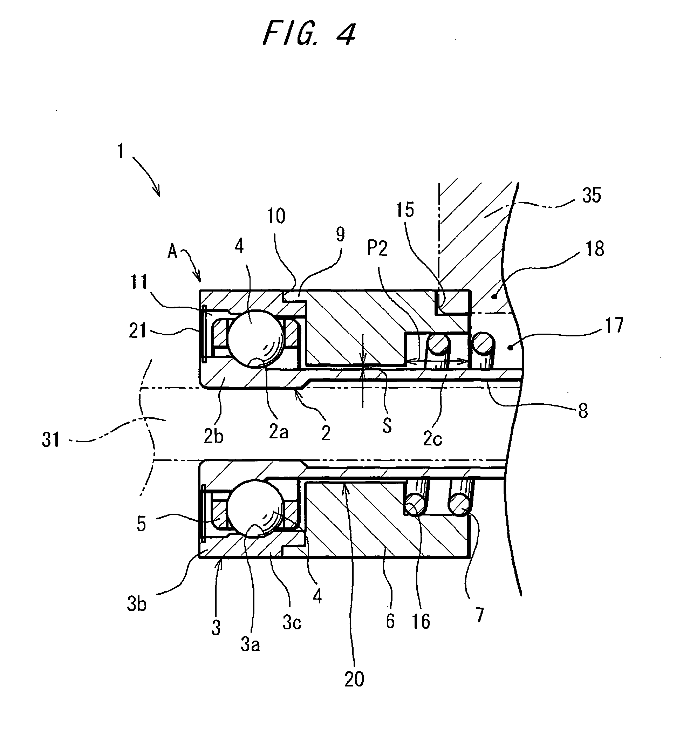

FIG. 4 shows a turbocharger bearing assembly 1 according to a second embodiment of the invention. The turbocharger bearing assembly 1 of this embodiment differs from that of the first embodiment in that the oil holes 14 are omitted because grease lubrication is adopted, and that a labyrinth seal 20 is formed between the inner peripheries of the sleeves 6 and the outer periphery of the inner ring 2.
According to this embodiment, the oil hole 14 is omitted, whereas the sleeve 6 has its inner and outer peripheries formed flat and the inner periphery thereof is in close adjacency to the outer periphery of the inner ring 2 so that a gap S of 0.5 mm or less is defined therebetween. In addition, a seal member 21 for sealing grease is provided at a lateral side of the outer ring 3.
The reason for limiting the gap S to 0.5 mm or less is because a gap S exceeding 0.5 mm cannot constitute the labyrinth seal 20. In the case of the grease lubrication, the labyrinth seal negates the need to provide the seal members 21 at the respective laterally inner sides of the right-hand and left-hand angular bearings A, A. Hence, the turbocharger bearing assembly 1 may be manufactured at low cost.

It is to be noted that the invention is not limited to the foregoing embodiments. For instance, the configuration of the sleeve 6 or the dimensions of the first engaging portion 9, second engaging portion 15 and step portion 16 may be varied. The recess 8 formed on the inner periphery of the inner ring 2 may be narrowed or partitioned. Furthermore, the oil hole 14 may be formed at place deviated from a line connecting the first engaging portion 9 and the second engaging portion 15.

## Claims

1. A turbocharger bearing assembly disposed in a housing for rotatably supporting a rotary shaft of a turbocharger, comprising:
a substantially cylindrical inner ring fitted on an outer periphery of the rotary shaft and formed with inner raceways on its outer periphery at places adjacent to opposite ends thereof;
a pair of outer rings mounted to the housing as spaced away from each other with respect to an axial direction of the rotary shaft and formed with outer raceways on their inner peripheries in opposing relation with the inner raceways;
a plurality of rolling elements rollably interposed between the respective inner raceways of the inner ring and the respective outer raceways of the outer rings;
a pair of sleeves interposed between the outer rings as defining a gap therebetween and opposing each other with respect to the axial direction of the rotary shaft, the sleeve formed with an engaging portion on its outer periphery for restricting its rotation relative to the housing and the outer ring; and
a spring interposed between these sleeves for spring biasing the outer rings via the sleeves in axially outward directions with respect to the rotary shaft, thereby applying a preload to the bearings.

2. A turbocharger bearing assembly according to Claim 1, wherein the sleeve is formed from a resin material and the sleeve and the outer ring are integrally formed.

3. A turbocharger bearing assembly according to Claim 1 or 2, wherein an annularly notched step portion is formed on an inner periphery of the sleeve at an inside end thereof with respect to the axial direction of the rotary shaft.

4. A turbocharger bearing assembly according to any of Claims 1 to 3, wherein the inner periphery of the sleeve and the outer periphery of the inner ring cooperate to constitute a labyrinth seal having a gap of 0.5 mm or less.

5. A turbocharger bearing assembly according to any of Claims 1 to 4, wherein the inner ring is formed with a recess on the inner periphery thereof for defining a gap between itself and the rotary shaft, the recess extended across a required axial range.
